(19) Europäisches Patentamt / European Patent Office / Office européen des brevets

(11) **EP 2 444 209 B1**

(12) **EUROPEAN PATENT SPECIFICATION**

(45) Date of publication and mention
of the grant of the patent:
**22.04.2015 Bulletin 2015/17**

(51) Int Cl.:
**B25J 9/16** *(2006.01)*

(21) Application number: **10177506.2**

(22) Date of filing: **18.09.2010**

(54) **Method for generating kinematical structures of a reconfigurable parallel robot with vertical actuators and its comprising system**

Methode fur die Erstellung kinematischer Strukturen eines Rekonfigurabilen Parallelen Roboter mit vertikalen Actuatoren und sein besthenedes System

Méthode pour générer des structures cinématique reconfigurable d'un robot parallèle avec vérins verticaux et de son système comprenant

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**25.04.2012 Bulletin 2012/17**

(73) Proprietor: **Universitatea Tehnica din Cluj-Napoca 400114 Cluj-Napoca (RO)**

(72) Inventors:
• **Brisan, Cornel**
  **400609, Cluj-Napoca (RO)**
• **Hiller, Manfred**
  **47443 Moers (DE)**

(56) References cited:
• **DHINGRA A K ET AL: "COMPUTER-AIDED MECHANISM DESIGN: A SYMBOLIC-COMPUTING APPROACH", COMPUTER AIDED DESIGN, ELSEVIER PUBLISHERS BV., BARKING, GB, vol. 25, no. 5, 1 May 1993 (1993-05-01), pages 300-310, XP000373124, ISSN: 0010-4485, DOI: DOI:10.1016/0010-4485(93) 90087-5**
• **NEHAOUA L ET AL: "Design and Modeling of a New Motorcycle Riding Simulator", AMERICAN CONTROL CONFERENCE, 2007. ACC '07, IEEE, PISCATAWAY, NJ, USA, 9 July 2007 (2007-07-09), pages 176-181, XP031215621, ISBN: 978-1-4244-0988-4**

EP 2 444 209 B1

**Description**

This invention refers to a method for generating kinematical structures of a reconfigurable parallel robot with vertical actuators and its comprising system. This method offers the possibility of establishing different structure varieties of parallel robots with different degrees of freedom, using own algorithm. Interchangeable connection elements have been designed in order to be able to apply the method and generate the system.

The technical systems' reconfigurability consists in their property to partial or totally modifies their characteristics so that they are able to adapt to different constraints of the process in which they are involved [1]. Reconfigurability represents an adaptation type of technical systems at the constraints of globalization. Reconfigurability refers to the possibility of obtaining various types of parallel robots, with the use of a finite number of interchangeable components, with different technical and functional properties.

Parallel robots have two platforms: one is fixed and the other is mobile. The two platforms are connected with a number of identical or different kinematic chains [2]. A large number of parallel robots with different degrees of freedom have been developed by modifying the number of chains and the number and type of active and passive joints. Choosing a specific structure with certain degrees of freedom is done after careful consideration of the particularities of the task that the robot will fulfil.

Designing and building a desired structure of a parallel robot presents disadvantages regarding the fact that all structures contain proprietary elements.

Similarly there are known methods of realizing specific reconfigurable parallel robot structures, which utilize modularized kinematic chains and permit the configuration and reconfiguration of the robot. The disadvantage of the known methods is given by the fact that they allow the realization of a narrow range of robots, and in some cases need elements specific to the structure [3]. Another disadvantage of known methods is the fact that they do not offer an algorithm which specifies what the modules can be chosen depending on the desired structure [4].

This invention solves the problem of building a reconfigurable parallel robotic system with vertical actuators by providing a method of generating the kinematical structure of these robots.

Another purpose of the invention is to create the constructive elements that define the property of reconfigurability and are necessary for the method.

The generation method of kinematical structures offers a system of mathematical relations and an algorithm for generating the topology. The structure uses two types of kinematical chains. The first type of kinematic chain, named PSU (Prismatic - Spherical - Universal), comprises of a prismatic joint, a spherical joint, a connecting element with constant length and respectively a universal joint. The second type of a kinematic chain, named PSR (Prismatic - Spherical - Rotational) which consists in a prismatic joint, a spherical joint, a connecting element with constant length, and respectively a rotational joint.

The kinematical structure of the proposed reconfigurable parallel robotic system is obtained by connecting a mobile platform to a fixed platform only by the PSU and/or the PSR type of kinematic chains. The different structures of the robots depend on the combination of the different numbers of the two kinematic chain types. The method offers the mathematical relations that determine the topological values of the reconfigurable parallel robots.

Reconfigurably of the structures is assured by using the same mounting dimensions between the elements that form each kinematic chain. Therefore the rotational joint, the universal joint and the spherical joint have the identical diameter D and the identical length L. The constant length element has the mounting dimension according to the hole of the joints. Therefore, all the linking elements of the robots have the mounting dimensions that offer many combinations for assembly.

In order to determine the topological characteristics of the reconfigurable parallel robots, with vertical actuators, the following hypothesis are considered:

    a) all robots have a fixed platform and at most one mobile platform,
    b) the mobile platform is connected to the fixed platform only by the PSU and/or the PSR type kinematic chains,
    c) the number of the PSR kinematic chains is denoted by "a",
    d) the number of the PSU kinematic chains is denoted by "b",
    e) only the prismatic joints are active joints (engine joint).

The degrees of freedom of a parallel robot, of which elements are not under common geometrical constraints, are calculated by the relation:

$$M = 6n - 5C5 - 4C4 - 3C3 - 2C2 - C1 \tag{1}$$

where: n - number of mobile elements of the robot, Ci, (i=1,5) is the number of joints which allow (6-i) movements.

One can observe:

$$M = a + b ,$$ (2)

$$n = 2a + 2b + 1 ,$$ (3)

$$C5 = a + 2b ,$$ (4)

$$C4 = a + b ,$$ (5)

$$C3 = a + b ,$$ (6)

$$C2 = C1 = 0 ,$$ (7)

Replacing relations (2),...,(7) in relation (1) yields:

$$M=6-b,$$ (8)

One can also observe:

$$M = a + b ,$$ (9)

The relations that allow the determination of the topological characteristics of the reconfigurable parallel robots result from relations (8) and (9).

In order to apply the method, the first step considers the number of degrees of freedom of the robot known. The second step implies determining the number of the PSU kinematic chains b from relation (8) depending on the number of desired degrees of freedom. The next step is to determine the number of the PSR kinematic chains a based on relation (9).

In this respect, depending on the number of the desired degrees of freedom, the method offers the values for the number of the PSR kinematic chains *b* and for the number of the PSU kinematic chains *b*. Based on the method, four varieties of reconfigurable parallel robot are obtained:

$$a=0, b=3, M=3,$$ (10)

$$a=2, b=2, M=4,$$ (11)

$$a=4, b=1, M=5,$$ (12)

$$a=6, b=0, M=6,$$ (13)

Relations (10) topologically define the reconfigurable parallel robot with three degrees of freedom formed by one fixed platform, one mobile platform and three kinematic chains of the PSR type (b=3).

Relations (11) topologically define the reconfigurable parallel robot with four degrees of freedom formed by a fixed platform, a mobile platform, two kinematic chains of the PSU type (a=2) and two kinematic chains of the PSR type (b=2).

Relations (12) topologically define the reconfigurable parallel robot with four degrees of freedom formed by a fixed platform, a mobile platform, four kinematic chains of the PSU type (a=4) and a kinematic chain of the PSR type (b=1).

Relations (13) topologically define the reconfigurable parallel robot with six degrees of freedom formed by a fixed platform, a mobile platform and six kinematic chains of the PSU type (a=6).

*Brief description of the drawings*

These and other characteristics of the invention will be clarified by the following description of a preferential form of embodiment, given as a non-restrictive example, with reference to the attached drawings, where:

- figure 1, shows the diagram of PSU chain;

- figure 2, shows the diagram of PSR chain;

- figure 3, the diagram of a reconfigurable parallel robot with 3 degrees of freedom and vertical actuators;

- figure 4, the diagram of a reconfigurable parallel robot with 4 degrees of freedom and vertical actuators;

- figure 5, the diagram of a reconfigurable parallel robot with 5 degrees of freedom and vertical actuators;

- figure 6, the diagram of a reconfigurable parallel robot with 6 degrees of freedom and vertical actuators;

- figure 7, the rotational joint with the connecting dimensions (L and D);

- figure 8, the universal joint with the connecting dimensions (L and D) ;

- figure 9, the spherical joint with the connecting dimensions (L and D);

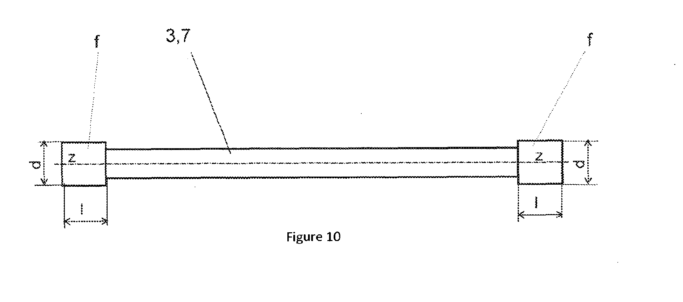

- figure 10, the constant length elements with the connecting dimensions (L and D).

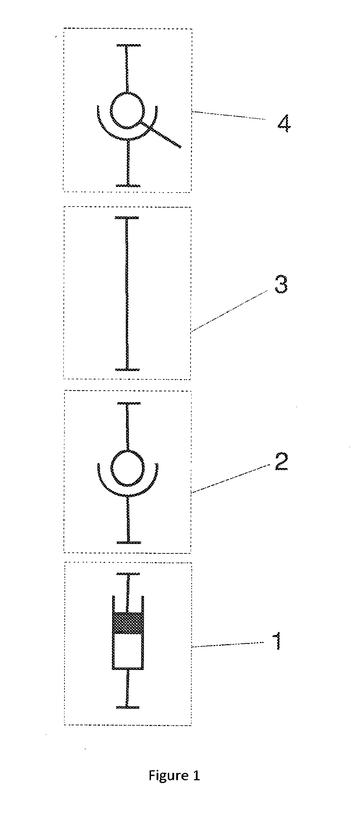

Figure 1 presents a kinematic chain named PSU (Prismatic - Spherical - Universal) which is constructed from a prismatic joint (1) as an active joint, a spherical joint (2), a connecting element with constant length (3) and respectively a universal joint (4).

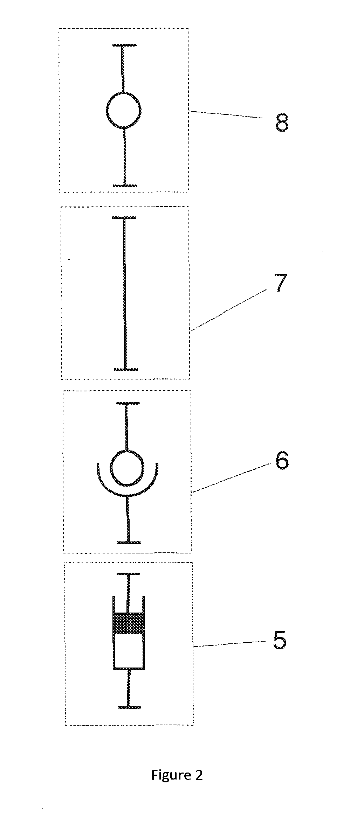

Figure 2 shows a kinematic chain named PSR (Prismatic - Spherical - Rotational) which is constructed from a prismatic joint (5) as an active joint, a spherical joint (6), a connecting element with constant length (7), and respectively a rotational joint (8).

Relations (10), (11), (12) and (13) describe four variants (A, B, C, D) of reconfigurable parallel robotic system with vertical actuators. These variants are the following:

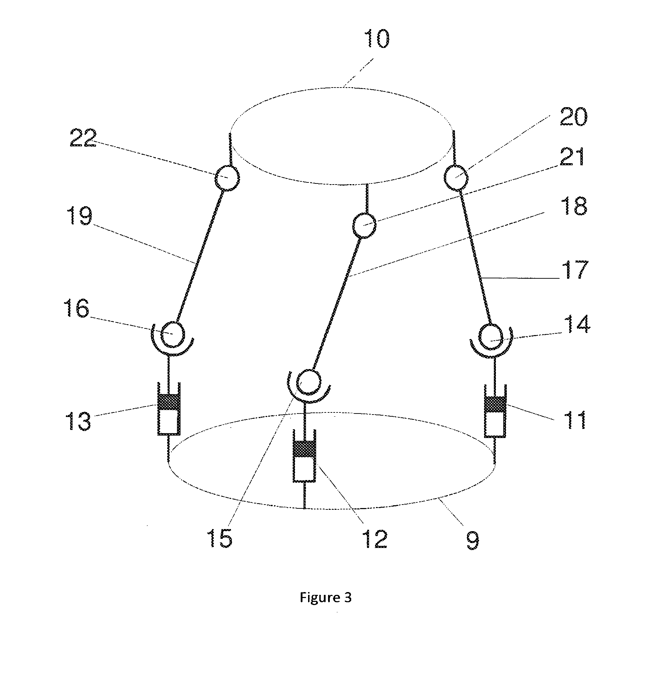

A) The variant with three degrees of freedom (Figure 3) contains three kinematic chains of the PSR type, which connect a fixed platform (9) with a mobile platform (10). The kinematic structure of this robot is formed by fixed platform (9), mobile platform (10), prismatic joints (11), (12), (13), spherical joints (14), (15), (16), constant length elements (17), (18), (19), rotational joints (20), (21), (22).

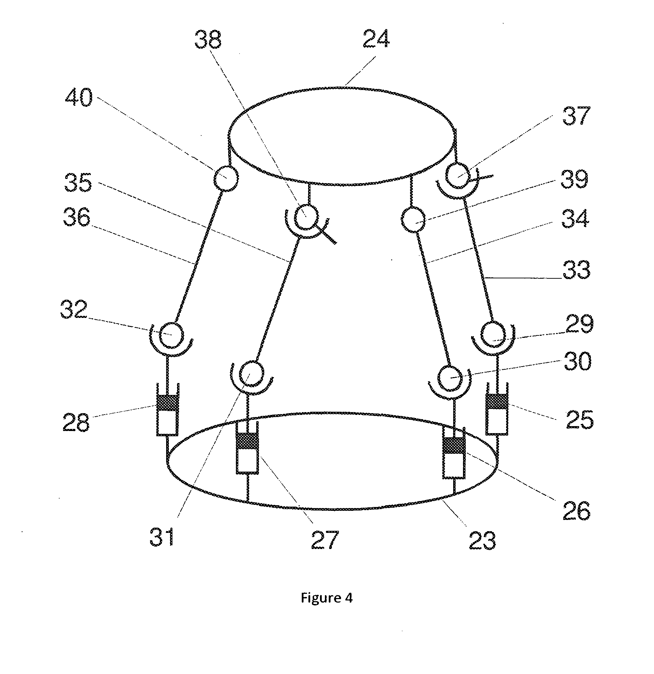

B) The variant with four degrees of freedom (Figure 4) contains two kinematic chains of the PSR type and respectively two kinematic chains of the PSU type. These four kinematic chains connect a fixed platform (23) with a mobile platform (24). Kinematic structure of this robot is formed by: fixed platform (23), mobile platform (24), prismatic joints (25), (26), (27), (28), spherical joints (29), (30), (31), (32), constant length elements (33), (34), (35), (36), universal joints (37), (38), and rotational joints (39), (40).

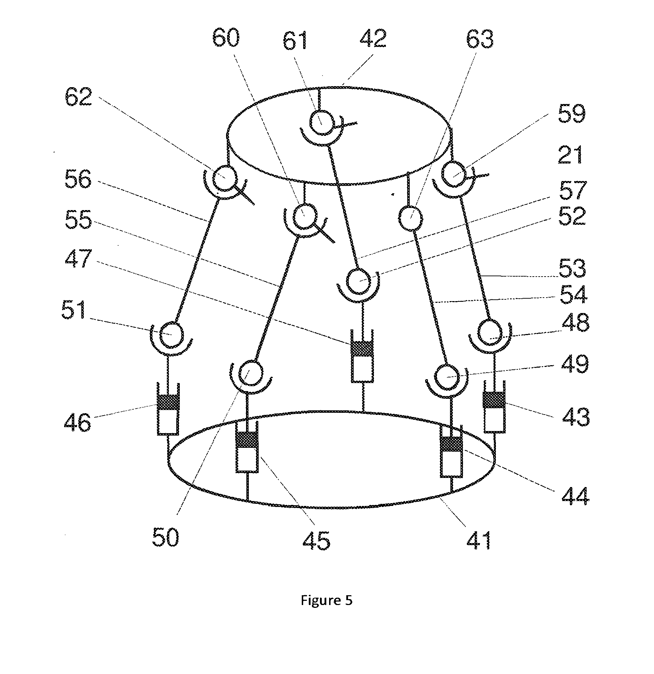

C) The variant with five degrees of freedom (Figure 5) contains one kinematic chain of the PSR type and four kinematic chains of the PSU type. These five kinematic chains connect a fixed platform (41) with a mobile platform (42). The kinematic structure of this robot is formed by: fixed platform (41), mobile platform (42), prismatic joints (43), (44), (45), (46), (47), spherical joints (48), (49), (50), (51), (52), constant length elements (53), (54), (55), (56), (57), universal joints (58), (59), (60), (61) and rotational joint (62).

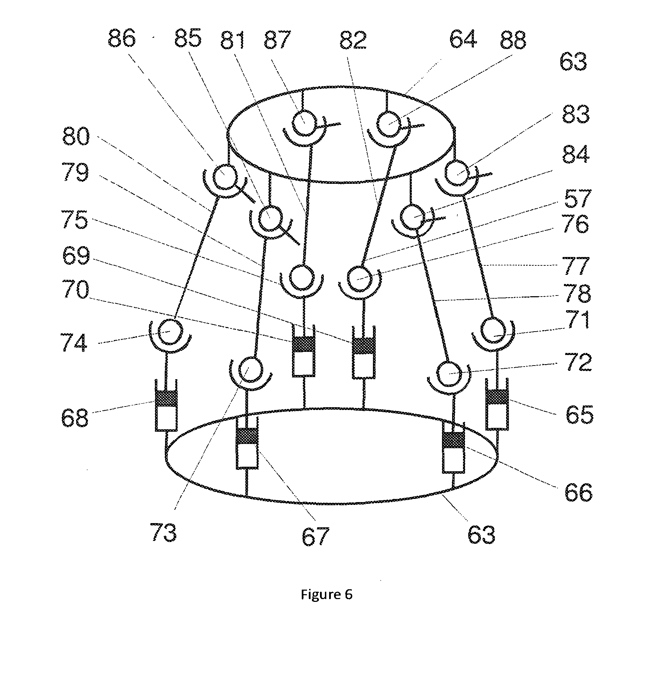

D) The variant with six degrees of freedom (Figure 6) contains six kinematic chains of the PSU type. These six kinematic chains connect a fixed platform (63) to a mobile platform (64).

The kinematical structure of this robot is formed by: fixed platform (63), mobile platform (64), prismatic joints (65), (66), (67), (68), (69), (70), spherical joints (71), (72), (73), (74), (75), (76), constant length elements (77), (78), (79), (80), (81), (82), universal joints (83), (84), (85), (86), (87).

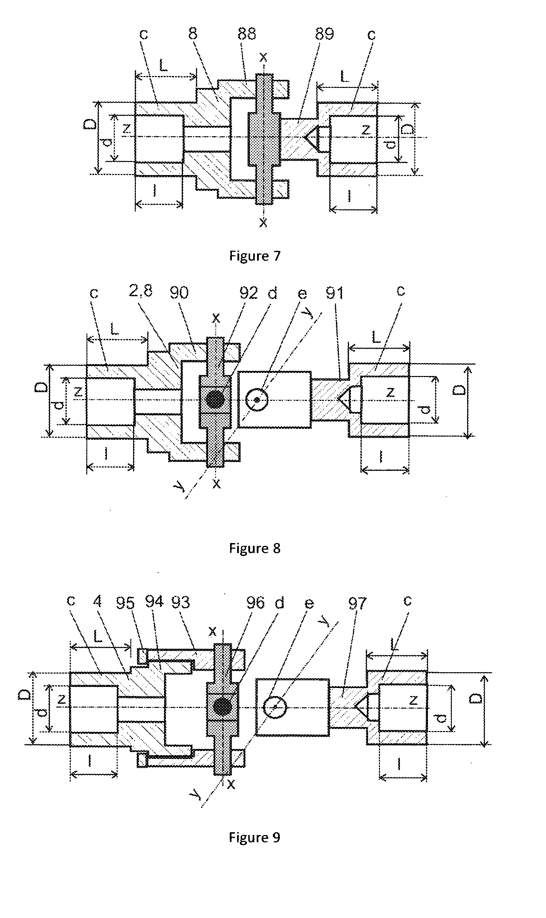

Reconfigurability of the structures is insured by the use of the same assembly dimensions between the elements that form the kinematic of the robot. Rotational joint 8 (fig. 7) is made from part 88 with claw, part 89 with a shaft that allows the rotation movement around the x-x axis. Parts 88 and 89 both have the same bit c.

Universal joint 4 (fig. 8) is made from part 90 with a claw, part 91 and cardan 92. Shaft $d$ of cardan 92 and hole $e$ of part 91 allow linking between the universal joint elements. In order to connect with other elements of the kinematic chain, universal joint 4 has two identical bits c. Universal joint 4 allows two rotation movements between parts 90 and 91 around axis x-x and y-y.

Spherical joints 2 and 6 (fig. 8) are made from part 93, with claw, mounted on part 94 and axially locked with part 95. Parts 93 and 94 can rotate around axis z-z. Shaft $d$ of cardan 96 and hole $e$ of part 97 allow linking between the spherical joint elements. In order to connect with other elements of the kinematic chain, spherical joint 4 has two identical parts c. Spherical joints 2 and 6 allow parts 94 and 97 to make three rotations movements around of the axis x-x, y-y and z-z.

Constant length elements 3 and 7 consist of a simple shaft that has at the two ends a bit $f$ of the same dimensions. Bits f are used in order to connect with any joint, as required. The connection between constant length elements 3 and 7 and the required joint is done using bit $f$.

Each bit $c$ of the joints contains a pipe portion with an exterior cylindrical surface characterized by diameter D and length L, and a hole with diameter $d$ and length $l$. The dimensions of the hole are identical to the dimensions of bit $f$.

Other standardized parts, that have a bit $c$ or $f$ are used for coupling any kinematic elements of the structure of robots on fixed and mobile platforms (9) and (10).

The application field of the parallel reconfigurable robots with vertical actuators refers to operations such as drilling and milling.

## References

1. Koren Y., et al, Reconfigurable manufacturing systems, Annals of CIRP, vol 48/2/1999.

2. Merlet J-P. Parallel robots. Kluwer, Dordrecht, 2000.

3. Schütz, D, Raatz, A. Hesselbach, J. The Development of a Reconfigurable Parallel Robot with Binary Actuators In: Advances in Robot Kinematics - Motion in Man and Machine (ARK 2010), P.p 225-232, 2010, Springer.

4. Nehaoua L., et al, Design and modeling of a new motorcycle riding simulator, American Control Conference 2007, pages 176-181, XP 031215621.

## Claims

1. Method for the generation of kinematical structures for reconfigurable parallel robots with vertical actuators, robots that consist of a fixed platform (9), a mobile platform (10), a number a of the PSU kinematic chains (PSU), composed of a prismatic joint (1) as an active joint, a spherical joint (2), a connecting element with constant length (3) and a universal joint (4), a number $b$ of the PSR kinematic chains (PSR), composed from a prismatic joint (5) as an active joint, a spherical joint (6), a connecting element with constant length (7), and respectively a rotational joint (8), **characterized so that in order** to establish the reconfigurable structure of the robots, during the first step, the number of degrees of freedom of the robot M is considered known, during the second step, depending of the number of degrees of freedom desired, the number of the PSU kinematic chains b from relation M=6-b (relation 8) is determined, then, based on relation / M=a+b (relation 9), the number of the (PSR) kinematic chains a is determined, the reconfigurability of the structures is assured by the utilization of the same mounting dimensions between the elements that form all the kinematic chains.

2. Method for generating kinematical structures of reconfigurable parallel robots with vertical actuators, as in claim 1, **characterized in that**, the topology of the reconfigurable parallel robot with three degrees of freedom given by relation (10) consists by a fixed platform (9), a mobile platform (10) and a number of three kinematic chains of type PSR (b=3) and no kinematic chains of type PSU (a=0).

3. Method for generating kinematical structures of reconfigurable parallel robots with vertical actuators, as in claim 1, **characterized in that**, the topology of the reconfigurable parallel robot with four degrees of freedom given by relation (11) consists by a fixed platform (9), a mobile platform (10) and a number of two kinematic chains of type PSR (b=2) and a number of two kinematic chains of type PSU (a=2).

4. Method for generating kinematical structures of reconfigurable parallel robots with vertical actuators, as in claim 1, **characterized in that**, the topology of the reconfigurable parallel robot with five degrees of freedom given by relation (12) consists by a fixed platform (9), a mobile platform (10) and a kinematic chain of type PSR (b=1) and a number of four kinematic chains of type PSU (a=4).

5. Method for generating kinematical structures of reconfigurable parallel robots with vertical actuators, as in claim 1, **characterized in that**, the topology of the reconfigurable parallel robot with six degrees of freedom given by relation (13) consists of a fixed platform (9), a mobile platform (10) a number of six kinematic chains of type PSU (a=6) and no kinematic chain of type PSR (b=0).

6. System of a reconfigurable parallel robots with vertical actuators containing a fixed platform (9), a mobile platform (10), a number a of the PSU kinematic chains (PSU), a number b of the PSR kinematic chains (PSR), **characterized in that**, in order to obtain an easy reconfigurable structure, it uses a rotational joint (8), made from a part (88) with claw, and a second part (89), whereby both parts (88) and (89) have the same bit c, a universal joint (4), made from a part (90) with claw, a part (91) and a cardan (92), whereby these end parts (90) and (91) both have two identical parts c, a spherical joint (2) consisting of a part (93), with claw, mounted on a third part (94) and axially locked with a fourth part (95), whereby said third and fourth end parts (94) and (97) both have two identical parts c and, also, use a constant length element (3), each with two bits f that have the same diameter d as any bit c.

7. System of a reconfigurable parallel robots with vertical actuators, as in claim 6, **characterized in that**, each bit *(c)* of the joints contains a pipe portion with an exterior cylindrical surface **characterized by** the diameter (D) and the length (L), and a hole with diameter (d) and length (l), the link between any joint (2), (4) or (8) and constant element (3) is realized by the hole of the joint, with diameter (d) and length (l) that is inserted bit (f) of the constant element (3).

8. System of reconfigurable parallel robots with vertical actuators, as in claim 6, and 7 **characterized in that**, other standardized parts, that have a bit *(c)* or *(f)* are used for coupling any kinematic elements of the structure of robots on the fixed and mobile platform (9) and (10).

**Patentansprüche**

1. Eine Methode zur Erzeugung von kinematischen Strukturen fur rekonfigurabile parallele Robotter mit vertikalen Aktorik, Robotter die aus den folgenden Elementen bestehen : eine feste Platform (9), eine bewegliche Platform (10), einer Nummer von "a" PSU kinematischen Ketten, die aus den folgenden Elementen bestehen : ein Schubgelenk (1) als das aktive Gelenk, ein Kugelgelenk (2), ein Verbindungselement mit konstanter Lange (3), ein Kreuzgelenk (4), einer Nummer von "b" PSR kinematischen Ketten, die aus folgenden Elementen bestehen : ein Schubgelenk (5) als das aktive Gelenk, ein Kugelgelenk (6), ein Verbindungselement mit konstanter Lange (7) und ein Rotationsgelenk (8), die so characterisiert werden, dass man fur den ersten Schritt der feststellung der moglichen Strukturen fur die rekonfigurabilen Robotter einen bestimmten Freiheitsgrad M benotigt, und im zweiten Schritt man mit der Gleichung M=6-b (Gleichung 8) die Anzahl der PSR elementen ("b") bestimmt, und aus der gleichung M=a+b man die Anzahl der kinmeatischen Ketten PSU ("a") bestimmt, wahrend die rekonfigurabilitat des Systems dadurch gesichert ist, dass alle Elemente die alle kinematischen Ketten bilden die selben verbindungsabmessungen haben.

2. Die Methode zur Erzeugung von den Kinematischen Strukturen fur rekonfigurable parallele Robotter mir vertikaler Aktorik, wie sie in dem Anspruch 1 beschrieben sind, ist **dadurch gekennzeichnet dass** die Topologie von den rekonfigurablen paralleln Robottem mit drei Freiheitsgraden von der Gleichung (10) gegeben ist, und die aus einer festen Platform (9), einer beweglichen Platform (10) und einer Nummer von drei PSR kinematischen Ketten (b=3) und keine PSU kinematischen Ketten (a=0) besteht.

3. Die Methode zur Erzeugung von den Kinematischen Strukturen fur rekonfigurable parallele Robotter mir vertikaler Aktorik, wie sie in dem Anspruch 1 beschrieben sind, ist **dadurch gekennzeichnet dass** die Topologie von den rekonfigurablen parallelen Robottem mit vier Freiheitsgraden von der Gleichung (11) gegeben ist, und die aus einer festen Platform (9), einer beweglichen Platform (10) und einer Nummer von zwei PSR kinematischen Ketten (b=2) und zwei PSU kinematischen Ketten (a=2) besteht.

4. Die Methode zur Erzeugung von den Kinematischen Strukturen fur rekonfigurable parallele Robotter mir vertikaler Aktorik, wie sie in dem Anspruch 1 beschrieben sind, ist **dadurch gekennzeichnet dass** die Topologie von den rekonfigurablen paralleln Robottern mit drei Freiheitsgraden von der Gleichung (12) gegeben ist, und die aus einer festen Platform (9), einer beweglichen Platform (10) und einer PSR kinematischen Ketten (b=1) und vier PSU kinematischen Ketten (a=4) besteht.

5. Die Methode zur Erzeugung von den Kinematischen Strukturen fur rekonfigurable parallele Robotter mir vertikaler Aktorik, wie sie in dem Anspruch 1 beschrieben sind, ist **dadurch gekennzeichnet dass** die Topologie von den rekonfigurablen paralleln Robottern mit drei Freiheitsgraden von der Gleichung (13) gegeben ist, und die aus einer festen Platform (9), einer beweglichen Platform (10) und keiner PSR kinematischen Kette (b=0) und sechs PSU kinematischen Ketten (a=6) besteht.

6. Ein System von Parallelen rekonfigurabilen Robottem mit vertikaler Aktorik, das aus einer festen Platform (9), einer beweglichen Platform (10), einer Nummer "a" von PSU kinematischen Ketten und einer Nummer "b" von PSR kinematischen Ketten besteht, kann **dadurch gekennzeichnet** werden, dass man um eine rekonfigurabile Struktur einfach erzielen mochte, man ein Rotationsgelenk (8) benutzt, daus einer Komponente (88) mit Klauen, und einer anderen Komponente (89) besteht, wo sowohl die Komponente (88) als auch (89) aus den folgenden Komponente bestheht : dieselbe Komponente c, ein Kreuzgelenk, dass aus einem Stuck (90) mit Klaue, einem Stuck (91) und einem Kardan (92) besteht, wo (90) und (91) beide eine identische Komponente c, eine Kugelkupplung (2), die aus den folgenden elementen besteht : Komponente (93) mit Klaue, die auf einer dritten Komponente (94) montiert ist und axiell mit der vierten Komponente (95) blockiert ist, wo die genennte Endkomponenten (94) und (97) beide die identische komponente c haben uns sowohl eine Verbindungselement mit konstanter Lange (3), jeder mit zwei bits f, die denselben durchkreis d als jeder andere bit c hat.

7. Ein System von Parallelen rekonfigurabilen Robottern mit vertikaler Aktorik, sowie es im Anspruch 6 presentiert wird, ist dur folgende gekennzeichnet : jeder bit (c) des gelenkes enthalt eine Tubulare portion mit einer ausseren cylindrischen oberflache, die die einen durchmas (D) und die Lange (L) hat, und einem Loch mit dem durchmesser (d) und der Lange (1), die verbindung zwischen jedem jeweiligen Gelenk (2), (4) oder (8) und dem konstantem element (3) ist durch das Loch in dem Gelenk gemacht, mit dem durchmesser (d) und der Lange (1), in dem man den bit (f) des konstantne Elementes (3) einfuhrt.

8. Ein System von Parallelen rekonfigurabilen Robottem mit vertikaler Aktorik, sowie es im Anspruch 6 presentiert wird, ist durch folgende gekennzeichnet : andere standardiesierte Komponente, die die bits (c) und (f) als befestigungsmoglichkeit benutzen werden fur jede kinematische komponente der struktur des Robotter benutzt, auf der festen Platform (9) und der beweglichen Platform (10).

## Revendications

1. Une méthode pour la régénération des structures cinématiques pour des robots parallèles reconfigurables avec des actuateurs verticaux, robots qui sont formés d'une plate-forme fixe (9), une plate-forme mobile (10), un nombre "a" de chaînes du PSU, composés d'un accouplement de translation (1) comme accouplement actif, un accouplement sphérique (2), un élément de relation à longueur constante (3), un accouplement universel (quardanique) (4), un nombre "b" de chaînes cinématiques PSR, formées d'un accouplement de translation (5) quasi accouplement actif, un accouplement sphérique (6), un élément de longueur constant (7) et un accouplement de rotation (8), caractérisés de manière à déterminer des structures reconfigurables des robots, dans le premier pas étant considérées comme connus les degrés de mobilité M du robot, et au deuxième pas en fonction du nombre de degrés de mobilité souhaité, à déterminer le nombre de chaînes cinématiques b (PSR) de la relation : M=6-b (relation 8), et à base de la relation M=a+b, on peut déterminer le nombre de chaînes cinématiques (PSU) "a", et la reconfigurabilité du système est assurée par le fait que tous les éléments ont les mêmes dimensions des points de montage.

2. La méthode pour la régénération des structures cinématiques pour les robots parallels reconfigurables avec des actuateurs verticaux, telle qu'elle est décrite dans la revendication 1 est **caractérisée par le fait que** la topologie des robots parallels reconfigurables à trios degrés de mobilité est donnée par la relation (10) consiste en une plate-forme fixe (9), une plate-forme mobile (10), et un nombre de chaînes cinématiques PSR (b=3) et aucune chaîne cinématique PSU (a=0).

3. La méthode pour la régénération des structures cinématiques pour des robots parallels reconfigurables avec des actuateurs verticaux, telle qu'elle est décrite dans la revendication 1, est **caractérisée par le fait que** la topologie des robots parallels reconfigurables à quatre degrés de mobilité est donnée par la relation (11) et consiste dans une plate-forme fixe (9), une plate-forme mobile (10), deux chaînes cinématiques PSR (b=2) et deux chaînes cinématiques PSU (a=2).

4. La méthode pour la régénération des structures cinématiques pour des robots parallels reconfigurables avec des actuateurs verticaux, telle qu'elle est décrite dans la revendication 1, est **caractérisée par le fait que** la topologie des robots parallels reconfigurables à cinq degrés de mobilité est donnée par la relation (12) et consiste en une plate-forme fixe (9), une plate-forme mobile (10), une chaîne cinématique PSR (b=1) et quatre chaînes cinématiques PSU (a=4).

5. La méthode pour la régénération des structures cinématiques pour des robots paralleles reconfigurables avec des actuateurs verticaux, telle qu'elle est décrite dans la revendication 1 est **caractérisée par le fait que** la topologie des robots parallels reconfiguraboles à quatre degrés de mobilité est donnée par la relation (13) et consiste en une plate-forme fixe (9), une plate-forme mobile (10), aucune chaîne cinématique PSR (b=0) et six chaînes cinématiques PSU (a=6).

6. Un système de robots paralleles reconfigurables avec des actuateurs verticaux, contenant une plate-forme fixe (9), une plate-forme mobile (10), un nombre a de chaînes cinématiques PSU, un nombre b de chaînes cinématiques PSR, **caractérisée par le fait que**, pour obtenir une structure légèrement reconfigurable, utilise un accouplement de rotation (8), formé d'une composante (88) avec une griffe et une seconde composante (89), où tant la composante (89) et (88) contiennent la même composante c, un accouplement universel (quardanique), formé d'un morceau (90) avec une griffe, une composante (91) et un quardan (92), où les morceaux terminaux (90) et (91) les deux contiennent les composantes identiques c, un accouplement sphérique (2), formé de la composante (93), avec griffe, montée sur une troisième composante (94) et bloquée axiellement avec une quatrième composante (95), où les soi-disant composantes terminales (94) et (97) ont les composantes identiques c et aussi un élément la longueur constante (3), chacun avec deux bits **f** ayant le même diamètre **d** comme tout autre bit **c.**

7. Un système de robots parallels reconfigurables avec des actuateurs verticaux, tel qu'il est présenté dans la revendication 6, est **caractérisé par** : chaque bit (c) de l'accouplement contient une partie tubulaire avec une surface extérieure cyllindrique **caractérisée par** le diamètre (D) et la longueur (L) et un trou ayant le diamètre (d) et la longueur (1), le lien entre tous les accouplements (2), (4) ou (8) et l'élément constant (3) est réalisé par le trou de l'accouplement, ayant le diamètre (d) et la longueur (1), par laquelle est inséré le bit (f) de l'élément constant (3).

8. Un système de robots paralleles reconfigurables avec des actuateurs verticaux, tel qu'il est présenté dans la revendication 6, est **caractérisé par**: d'autres composantes standardisées, ayant les bits (c) et (f) sont utilisées pour tous les éléments cinématiques de la structure des robots, sur la plate-forme fixe (9) et la plate-forme mobile (10).

Figure 1

Figure 2

Figure 3

Figure 4

Figure 5

Figure 6

Figure 7

Figure 8

Figure 9

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Reconfigurable manufacturing systems. **KOREN Y. et al.** Annals of CIRP. 1999, vol. 48/2
- **MERLET J-P.** Parallel robots. Kluwer, 2000
- The Development of a Reconfigurable Parallel Robot with Binary Actuators. **SCHÜTZ, D ; RAATZ, A ; HESSELBACH, J.** Advances in Robot Kinematics - Motion in Man and Machine. Springer, 2010, 225-232
- **NEHAOUA L. et al.** Design and modeling of a new motorcycle riding simulator. *American Control Conference,* 2007, 176-181